Europäisches Patentamt

European Patent Office

Office européen des brevets

(11) Publication number: **0 163 937**
**B1**

(12) **EUROPEAN PATENT SPECIFICATION**

(45) Date of publication of patent specification: 08.08.90

(21) Application number: 85105292.8

(22) Date of filing: 30.04.85

(60) Divisional application 88107737 filed on 13.05.88.

(51) Int. Cl.⁵: **F 16 C 33/20**

(54) Bearing material and method of making the said bearing material.

(30) Priority: 30.04.84 US 605037
30.04.84 US 607863

(43) Date of publication of application:
11.12.85 Bulletin 85/50

(45) Publication of the grant of the patent:
08.08.90 Bulletin 90/32

(84) Designated Contracting States:
DE GB IT SE

(56) References cited:
FR-A-1 112 137
FR-A-2 383 779
GB-A-1 032 833

(73) Proprietor: FEDERAL MOGUL CORPORATION
26555 N.W. Highway
Southfield Michigan 48034 (US)

(72) Inventor: Pratt, George C.
2127 Brockman
Ann Arbor Michigan 48104 (US)
Inventor: Montpetit, Michael C.
15395 Osius
Chelsea Michigan 48118 (US)
Inventor: Lwtwynec, Michael D.
10607 Lee Ann Drive
Brighton Michigan 48116 (US)

(74) Representative: Baillie, Iain Cameron et al
c/o Ladas & Parry Isartorplatz 5
D-8000 München 2 (DE)

Courier Press, Leamington Spa, England.

# EP 0 163 937 B1

**Description**

This invention generally relates to an improved bearing material and related method, and more particularly to an improved composite bearing material which includes polytetrafluoroethylene (PTFE). The invention also relates to a method of making a PTFE based tape suitable for impregnation into a porous metal matrix.

Dry bearing materials, i.e., those which will operate as a bearing without the benefit of a lubricant applied to the bearing surface, are well known and may generally be considered to be of three main types: 1) homogeneous materials which may be molded or pressed and machined, any surface of which can be the bearing surface; 2) non-homogeneous materials generally taking the form of a backing material and a bearing layer, in which the bearing layer is a dry bearing composition; and 3) non-homogeneous materials generally taking the form of a backing material and an impregnated interlayer, and having a relatively thin surface layer over the interlayer, which surface layer generally cannot be machined without seriously adversely affecting the bearing capability of the material because of exposure of the interlayer. The present invention may generally be considered to be a composite material of the third general type referred to above, except that the surface layer is of significant thickness such that it can be machined without seriously affecting bearing capability.

Numerous situations arise wherein a bearing material is required to provide good wear resistance and low friction under conditions of moderate load and temperature while operating in a substantially dry or non-lubricated environment. A variety of composite bearing materials and plastic materials which incorporate desirable bearing characteristics and are of good wear resistance under the foregoing operating conditions have heretofore been used or proposed for use as bearing materials. Of the various dry bearing materials known, those based on polytetrafluoroethylene (PTFE) have perhaps received the most widespread use for this purpose. While dry bearing materials incorporating PTFE have been found to provide satisfactory performance under many different bearing operating conditions, an inherent disadvantage of such materials, when they are of the third general type described above, is, as noted above, the difficulty encountered in the finish machining thereof into bearings of the desired configuration and size. It is desirable therefore to retain the advantages of the third general type of bearing material, while at the same time providing the product with a degree of machinability. Among such advantages of this third general type of bearing material are: 1) a good bond between the lining and the backing (the porous interlayer being metallurgically bonded to the backing, and the polymer being keyed into the porous interlayer)—(This is particularly important in the case of PTFE which is difficult to bond to a backing. Composites of the second general type referred to above in which the lining is PTFE based tend to have a weak bond); 2) dimensional stability (shared with the second general type referred to above when the dry bearing composition lining is thin); and 3) high thermal conductivity (shared with the second general type referred to above when the dry bearing composition lining is thin).

Dry bearing materials consisting of a metal backing and a porous metal interlayer impregnated with PTFE are well known. Generally, the PTFE is applied to the surface of the porous interlayer as a thick paste obtained by the coagulation of a dispersion of micron size PTFE particles in water. Sufficient water is retained in the paste to make it amenable to roll impregnation into the porous interlayer. Metallic or non-metallic fillers may be incorporated by mixing them in powder form with the PTFE before coagulation or at some stage during the preparation of the paste.

FR—A—2383779 discloses a composite bearing material comprising a metal backing, a porous metal interlayer and a PTFE based composition impregnated in the metal interlayer. Optionally, the PTFE composition in this French specification may contain a combination of two or more ingredients selected from a metal, a metallic compound and a solid lubricant or all of them as fillers. It is further proposed to add a fibrous material with oil-affinity to the impregnating compounds so that lubricating oil may sweat from the bearing surfaces thereby offering a bearing suitable for high-speed running. This reference is generally silent as to the make up of the porous metal interlayer. Further, the problem of assuring a good bond between the metal backing and the porous metal interlayer and ensuring that the PTFE is keyed into the porous metal interlayer is not considered in this reference.

GB—A—1032833 discloses a porous metal matrix comprising a homogeneous blend of copper powder together with lead and tin powders uniformly distributed over the broadest size range of about −80 to about +325 mesh. More specifically, it is stated that the copper powder is preferably distributed over the aforesaid size range as opposed to having the copper powder of a uniform size. Further, it is indicated that the lead and tin powders are of a particle size less than about 100 mesh, which are admixed with the copper powder to form a homogeneous blend. Essentially, the aim here is to obtain a metal matrix which is uniformly porous with emphasis being placed on selecting a single particle size range and assuring that the particles are distributed over the entire size range selected.

The present invention aims at providing an improved composite bearing material and method of making same which possesses an enhanced metallurgical bond between the porous metal interlayer and the metal backing while assuring complete filling of the pores in the interlayer with the PTFE material.

The present invention therefore provides a composite bearing material suitable for both dry and lubricated bearing applications including a metal backing, a porous metal interlayer on said metal backing, and a polytetrafluoroethylene based composition substantially filling the pores of said porous metal

2

interlayer and forming a surface layer on the bearing material, said polytetrafluoroethylene based composition comprising from about 2% to about 10% by volume of at least one material selected from the group consisting of tin bronze and other copper alloys, as well as mixtures thereof; from about 5% to about 30% by volume of at least one material selected from the group consisting of metallic lead, metallic cadmium, an oxide of lead, and an oxide of cadmium, as well as mixtures thereof; from about 5% to about 30% by volume of at least one material selected from the group consisting of natural graphite and artificial graphite, as well as mixtures thereof; and the remainder comprising polytetrafluoroethylene, characterized in that said porous metal interlayer consists essentially of a relatively non-homogeneous mixture of particles from two distinct particle size ranges including a relatively fine powder range of about −300 mesh and less and a relatively coarse powder range from about −60 to +150 mesh, said relatively fine powder range comprising from about 5% to about 30% by weight of the total powder constituting said porous metal interlayer and wherein a substantial portion of said relatively fine powder is segregated from the particles in said coarse powder range to the innermost surface of said porous metal interlayer adjacent said metal backing and bonded to said metal backing and certain of said particles within said relatively coarse range, said particles from said relatively coarse range being bonded to one another and forming an open structure of numerous pores throughout at least the outermost surface of said porous metal interlayer.

A further aspect of the invention involves a method of making the aforesaid bearing material suitable for both dry and lubricated bearing applications.

The method according to the invention is defined by the features of claim 9.

Additional benefits and advantages of the present invention will become apparent upon a reading of the detailed description of the preferred embodiment taken in conjunction with the accompanying examples and the drawings wherein:

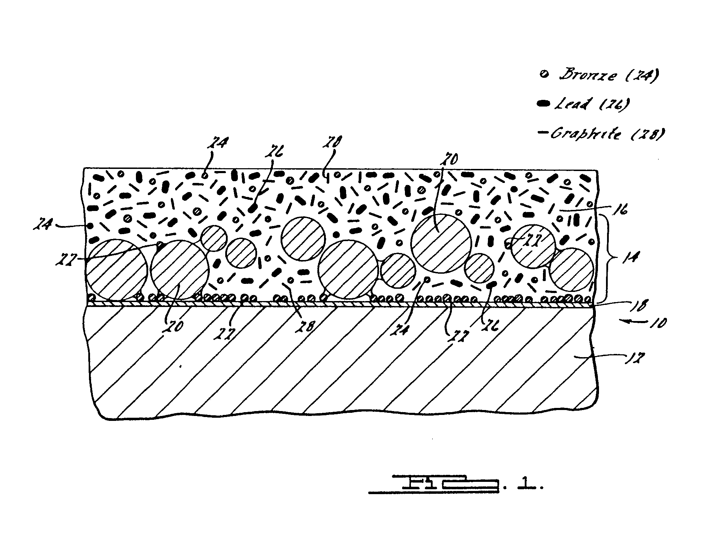

Figure 1 is a schematic representation of cross-section of bearing material made in accordance with the present invention.

Referring now to the drawings wherein the showings are for the purpose of illustrating a preferred embodiment of the present invention and are not for the purposes of limiting the invention, Figure 1 shows a schematic cross-sectional view of bearing material 10. The bearing material 10 generally comprises three layers: 1) a metal backing 12, 2) a porous metal interlayer 14, and 3) a PTFE based composition 16. The metal backing 12 will normally be low carbon steel, although other suitable backing materials should also be usable. In addition, in order to enhance adhesion of the porous metal interlayer 14 to the metal backing 12, the metal backing 12 may be plated with a layer 18 of nickel plating or other conventional plating materials.

The porous metal interlayer 14 may consist of bronze or other copper alloys such as tin bronze or leaded bronze. The porous metal interlayer or porous metal matrix is produced by spreading the copper alloy powder onto the metal backing and heating in a conventional manner in a non-oxidizing atmosphere to a temperature at which sintering of the powder particles to one another and to the metal backing takes place. For example, a temperature of 850 degrees C in a nitrogen-hydrogen atmosphere is suitable for sintering tin bronze particles. The powder used to form the porous metal interlayer consists of two distinct size ranges of particles obtained by blending relatively fine powder particles with relatively coarse powder particles to form a relatively homogeneous mixture. During and after spreading of the powder layer and before the completion of sintering, a substantial portion of the relatively fine particles segregate down to the metal backing surface where they promote formation of the bond between the interlayer and the metal backing. Hence a relatively non-homogeneous mixture of metal powder is formed on the metal backing. The surface activity of the fine particles during sintering is greater than that of the coarse particles, and hence, a stronger bond is established in a given time than if the fine particles were not present. Segregation of the fine particles to the steel surface leaves an open structure substantially of coarse particles in the upper surface of the interlayer ideally suited to impregnation with the PTFE based composition. Such segregation is represented schematically in Figure 1 where the large particles 20 represent coarse bronze powder or the like and the small particles 22 represent fine bronze powder or the like. The thickness of the porous metal interlayer after sintering is preferably from about 0.25 mm (0.010 inches) to about 0.40 mm (0.016 inches). It has been found that relatively coarse powders of the order of from about −60 to about 150 mesh (Tyler units or the like), preferably of the order of about −60 to about +100 mesh, mixed with relatively fine powders of the order of about −300 mesh give good results. (A minus sign prior to a mesh designation indicates that the powder will go through the stated mesh, while a plus sign indicates that the powder will be retained on the mesh. For example, −300 indicates particles of 300 mesh size and smaller). In addition, it has been found that the addition of wax during mixing of the two powder fractions prior to transfer of the mixed bronze powders to the hopper used to hold and distribute the powder on the metal backing, prevents premature segregation of the two size fractions of powder without affecting spreadability. The addition of about 0.5% by weight of "Acrawax" to the bronze powder by tumbling has been found to give satisfactory results. "Acrawax" is a synthetic amide wax manufactured by Glyco Chemical Corporation, and chemically comprises ethylene di-stearamide. In addition, zinc stearate may also be usable. This wax material volatilizes during sintering.

With regard to the PTFE based composition, it has been found possible to optimize wear resistance of the PTFE composition by the incorporation of three distinct types of filler materials. The fillers are preferably: 1) tin bronze, 2) metallic lead, and 3) natural graphite. (These are represented schematically in Figure 1 as particles 24, 26, and 28 respectively). Other copper alloys may be substituted for the tin bronze; metallic cadmium, an oxide of lead, or an oxide of cadmium may be substituted for the lead; and artificial graphite may be substituted for the natural graphite. However, some loss of dry wear resistance will result from such substitutions. Mixtures of each of these fillers are also believed to be usable. The filler component which is at least one material selected from the group consisting of tin bronze and other copper alloys, as well as mixtures thereof, should preferably be about −300 mesh powder and should generally be present in the range of from about 2% to about 10% by volume of the PTFE based composition, with from about 4% to about 6% by volume being preferred, and with about 5% by volume providing optimum results. The filler component which is at least one material selected from the group consisting of metallic lead, metallic cadmium, an oxide of lead, and an oxide of cadmium, as well as mixtures thereof, should preferably be about −200 mesh powder and should generally be present in the range of from about 5% to about 30% volume of the PTFE based composition, with from about 15% to about 30% by volume being preferred, and with about 20% by volume providing optimum results. The filler component which is at least one material selected from the group consisting of natural graphite and artificial graphite, as well as mixtures thereof, should preferably be about −325 mesh powder and should generally be present in the range of from about 5% to about 30% by volume of the PTFE based composition, with from about 10% to about 25% by volume being preferred, and with about 10% by volume providing optimum results. PTFE makes up the remainder of the lining composition.

In order to further describe and illustrate the present invention, the following examples are provided. It will be understood that these examples are provided for illustrative purposes and are not intended to be limiting of the scope of the invention as herein described and as set forth in the subjoined claims.

In Table I hereinbelow, the effect of incorporating various proportions of relatively fine bronze powder (−300 mesh in this example) into relatively coarse bronze powder (−60 to +100 mesh in this example) on both the bond strength to the steel substrate and on the porosity of the bronze layer is shown. Needless to say, the results given are after sintering. As shown in this table, the optimum percentage by weight of about −300 mesh powder giving a high level of both bond and porosity is about 20%. In general, the relatively fine powder preferably comprises from about 5% to about 30% by weight of the total powder used to produce the porous metal interlayer. Percent bond was metallographically measured by conventional techniques by determining the amount of bronze in contact with the steel surface, which was nickel plated. Percent porosity was metallographically measured by conventional techniques using an image analyzer.

TABLE I

| % by weight fine powder | % bond to the steel | % porosity in the sintered bronze layer |
|---|---|---|
| 0 | 23.6 | 47.3 |
| 10 | 41.4 | 42.6 |
| 20 | 87.3 | 43.8 |
| 30 | 83.7 | 32.8 |
| 40 | 98.8 | 19.6 |
| 50 | 94.5 | 20.8 |

Table II hereinbelow presents data on the wear of PTFE based compositions made in accordance with the present invention after rubbing against a 2.125 inch diameter steel shaft. A rotational speed of 980 rpm, a load of 11 lbs., and a test duration of 16 hours were used. (The PTFE based compositions were in sintered block form for these tests).

TABLE II

| Composition % by volume filler −remainder PTFE | | | |
|---|---|---|---|
| Tin bronze (−300) | Lead (−200) | Natural graphite (−325) | Wear ×10⁻³ cubic inches |
| 2.5 | 10 | 0 | 0.17 |
| 2.5 | 10 | 10 | 0.27 |
| 2.5 | 10 | 20 | 0.20 |
| 5 | 10 | 0 | 0.35 |
| 5 | 10 | 10 | 0.22 |
| 5 | 10 | 20 | 0.16 |
| 10 | 10 | 0 | 0.57 |
| 10 | 10 | 10 | 0.55 |
| 10 | 10 | 20 | 0.40 |
| 2.5 | 20 | 0 | 0.13 |
| 2.5 | 20 | 10 | 0.21 |
| 2.5 | 20 | 20 | 0.19 |
| 5 | 20 | 0 | 0.13 |
| 5 | 20 | 10 | 0.10* |
| 5 | 20 | 20 | 0.28 |
| 10 | 20 | 0 | 0.21 |
| 10 | 20 | 10 | 0.20 |
| 10 | 20 | 20 | 0.32 |

* Best result

The PTFE based compositions used with the present invention may conveniently be applied to the porous metal interlayer using conventional methods such as in the form of a paste incorporating a suitable proportion of a liquid such as water with the PTFE and fillers. The paste is impregnated into the porosity of the metal interlayer for instance by conventional rolling technique, the rolling conditions being chosen such as to leave a layer from about 0.05 mm (0.002 inches) to about 0.5 mm (0.020 inches) thick above the surface of the interlayer. The PTFE based composition is then sintered in a conventional manner at a temperature about 327 degrees C, and preferably below 400 degrees C, during which process the liquid evaporates and a firm bearing lining is created.

## Claims

1. A composite bearing material suitable for both dry and lubricated bearing applications including a metal backing, a porous metal interlayer on said metal backing, and a polytetrafluoroethylene based composition substantially filling the pores of said porous metal interlayer and forming a surface layer on the bearing material, said polytetrafluoroethylene based composition comprising from about 2% to about 10% by volume of at least one material selected from the group consisting of tin bronze and other copper alloys, as well as mixtures thereof; from about 5% to about 30% by volume of at least one material selected from the group consisting of metallic lead, metallic cadmium, an oxide of lead, and an oxide of cadmium, as well as mixtures thereof; from about 5% to about 30% by volume of at least one material selected from the group consisting of natural graphite and artificial graphite, as well as mixtures thereof; and the remainder comprising polytetrafluoroethylene, characterized in that said porous metal interlayer consists essentially of a relatively non-homogeneous mixture of particles from two distinct particle size ranges including a relatively fine powder range of about −300 mesh and less and a relatively coarse powder range from about −60 to +150 mesh, said relatively fine powder range comprising from about 5% to about 30% by weight of the total powder constituting said porous metal interlayer and wherein a substantial portion of said relatively fine powder is segregated from the particles in said coarse powder range to the innermost surface of said porous metal interlayer adjacent said metal backing and bonded to said metal backing and certain of said particles within said relatively coarse range, said particles from said relatively coarse range being bonded to one another and forming an open structure of numerous pores throughout at least the outermost surface of said porous metal interlayer.

2. The composite bearing material of claim 1, characterized in that the porous metal interlayer is initially applied to said metal backing as a relatively homogeneous mixture of metal powder comprising particles from said relatively fine and relatively coarse powder range and wherein during and after being applied to said metal backing and prior to the completion of sintering, a substantial portion of said relatively fine powder from said relatively homogeneous mixture of metal powder is segregated adjacent said metal backing so that a relatively non-homogeneous mixture of metal powder is formed on said metal backing.

3. The bearing material of claim 1 or 2, characterized in that said porous metal interlayer comprises bronze, tin bronze, leaded bronze or other copper alloys.

4. The bearing material of any of claims 1 to 3, characterized in that said porous metal interlayer has a thickness of from about 0.25 mm to about 0.40 mm.

5. The bearing material of any of claims 1 to 4, characterized in that said metal powder prior to sintering further comprises ethylene di-stearamide.

6. The bearing material of any of claims 1 to 5, characterized in that said metal backing comprises steel which preferably includes a layer of plating thereon.

7. The bearing material of any of claims 1 to 6, characterized in that said polytetrafluoroethylene based composition comprises from about 4% to about 6% by volume, preferably 5% by volume, of at least one material selected from the group consisting of tin bronze and other copper alloys, as well as mixtures thereof; from about 15% to about 30% by volume, preferably about 20% by volume, of at least one material selected from the group consisting of metallic lead, metallic cadmium, an oxide of lead, and an oxide of cadmium, as well as mixtures thereof; from about 10% to about 25% by volume, preferably about 10% by volume, of at least one material selected from the group consisting of natural graphite and artificial graphite, as well as mixtures thereof; and the remainder comprises polytetrafluoroethylene.

8. The bearing material of any of claims 1 to 7, characterized in that said polytetrafluoroethylene based composition has a thickness above the porous metal interlayer of from about 0.05 mm to about 0.5 mm.

9. A method of making the bearing material set forth in any of the preceding claims, including the steps of forming a porous metal interlayer on a metal backing by applying to said metal backing a mixture of metal power, spreading said mixture of metal powder onto said metal backing, sintering said metal powder on said metal backing, impregnating and substantially completely filling said porous metal interlayer with a polytetrafluoroethylene based composition, and thereafter sintering said filled porous metal interlayer at a temperature of at least about 350°C, characterized by the steps of initially providing a relatively homogeneous mixture of metal powder substantially comprising particles from two distinct particle size ranges, namely a relatively fine powder range and a relatively coarse powder range, selecting said two particles size ranges to provide for segregation of a substantial portion of said relatively fine powder from said relatively homogeneous mixture of metal powder such that the relatively fine powder shall consist essentially of particles of −300 mesh size and less, and said relatively coarse powder shall consist essentially of particles ranging from about −60 mesh size to about +150 mesh size, said relatively fine powder range comprising from about 5% to about 30% by weight of the total powder used to produce said porous metal interlayer, and spreading said homogeneous mixture on said backing such that a substantial portion of said relatively fine powder will be segregated to the innermost surface of said porous metal interlayer adjacent said metal backing prior to the completion of sintering to form a relatively non-homogeneous mixture of metal powder on said metal backing.

**Patentansprüche**

1. Verbundlagerwerkstoff für trockene und geschmierte Lager mit einem Metallrücken, einer auf dem Metallrücken vorgesehenen Zwischenschicht aus Metall und einer die Poren der porösen Zwischenschicht aus Metall im wesentlichen ausfüllenden und auf dem Lagerwerkstoff eine Oberflächenschicht bildenden Zusammensetzung auf Polytetrafluorethylenbasis, die etwa 2 bis etwa 10 Vol.-% mindestens eines Materials enthält, das aus der Gruppe ausgewählt ist, die aus Zinnbronze und anderen Kupferlegierungen sowie Gemischen derselben besteht, ferner etwa 5 bis etwa 30 Vol.-% mindestens eines Materials, das aus der Gruppe ausgewählt ist, die aus metallischem Blei, metallischem Kadmium, den Oxiden des Bleis und den Oxiden des Kadmiums sowie deren Gemischen besteht; etwa 5 bis etwa 30 Vol.-% mindestens eines Materials, das aus der Gruppe ausgewählt ist, die aus natürlichem und künstlichem Graphit und Gemischen derselben besteht; während der Rest mindestens teilweise aus Polytetrafluorethylen besteht, dadurch gekennzeichnet, daß die poröse Zwischenschicht aus Metall im wesentlichen aus einem relativ nichthomogenen Gemisch von Teilchen aus zwei deutlich unterscheidbaren Korngrößenbereichen besteht, und zwar aus einem Bereich eines relativ feinen Pulvers von etwa −300 mesh und kleiner und einem Bereich eines relativ groben Pulvers von etwa −60 bis +150 mesh, wobei der Bereich des relativ feinen Pulvers etwa 5 bis etwa 30 Gew.-% der Gesamtpulvermenge ausmacht, die die poröse Zwischenschicht aus Metall bildet, ein beträchtlicher Teil des relativ feinen Pulvers von den Teilchen im Bereich des groben Pulvers zu der dem Metallrücken benachbarten Innenfläche der porösen Zwischenschicht aus Metall hin abgeschieden und mit dem Metallrücken und bestimmten der Teilchen des relativ groben Bereichs stoffschlüssig verbunden ist und die Teilchen aus dem relativ groben Bereich stoffschlüssige miteinander verbunden sind und mindestens auf der ganzen äußeren Fläche der porösen Zwischenschicht aus Metall eine offene Struktur mit zahlreichen Poren bilden.

2. Verbundlagerwerkstoff nach Anspruch 1, dadurch gekennzeichnet, daß die poröse Zwischenschicht aus Metall zunächst auf den Metallrücken in Form eines relativ homogenen Gemisches aus einem Metallpulver aufgetragen wird, das Teilchen aus den Bereichen des relativ feinen und des relativ groben Pulvers enthält, und daß während des Auftragens auf den Metallrücken und danach und vor dem Fertigsintern ein beträchtlicher Teil des relativ feinen Pulvers aus dem relativ homogenen Metallpulvergemisch sich im Bereich des Metallrückens entmischt, so daß auf dem Metallrücken ein relativ nichthomogenes Metallpulvergemisch gebildet wird.

3. Lagerwerkstoff nach Anspruch 1 oder 2, dadurch gekennzeichnet, daß die poröse Zwischenschicht aus Metall mindestens teilweise aus Bronze, Zinnbronze, Bleibronze oder anderen Kupferlegierungen besteht.

4. Lagerwerkstoff nach einem der Ansprüche 1 bis 3, dadurch gekennzeichnet, daß die poröse Zwischenschicht aus Metall eine Dicke von etwa 0,25 mm bis etwa 0,40 mm hat.

5. Lagerwerkstoff nach einem der Ansprüche 1 bis 4, dadurch gekennzeichnet, daß das Metallpulver vor dem Sintern ferner Ethylendistearamid enthält.

6. Lagerwerkstoff nach einem der Ansprüche 1 bis 5, dadurch gekennzeichnet, daß der Metallrücken mindestens teilweise aus Stahl besteht, der vorzugsweise mit einer Plattierungsschicht versehen ist.

7. Lagerwerkstoff nach einem der Ansprüche 1 bis 6, dadurch gekennzeichnet, daß die Zusammensetzung auf Polytetrafluorethylenbasis etwa 4 bis 6 Vol.-%, vorzugsweise 5 Vol.-%, mindestens eines Materials enthält, das aus der Gruppe ausgewählt ist, die aus Zinnbronze und anderen Kupferlegierungen sowie Gemischen derselben besteht, ferner etwa 15 bis etwa 30 Vol.-%, vorzugsweise etwa 20 Vol.-%, mindestens eines Materials, das aus der Gruppe ausgewählt ist, die aus metallischem Blei, metallischem Kadmium, den Oxiden des Bleis und den Oxiden des Kadmiums sowie deren Gemischen besteht; etwa 10 bis etwa 25 Vol.-%, vorzugsweise etwa 10 Vol.-%, mindestens eines Materials, das aus der Gruppe ausgewählt ist, die aus natürlichem und künstlichem Graphit und Gemischen derselben besteht; während der Rest mindestens teilweise aus Polytetrafluorethylen besteht.

8. Lagerwerkstoff nach einem der Ansprüche 1 bis 7, dadurch gekennzeichnet, daß die Zusammensetzung auf Polytetrafluorethylenbasis über der porösen Zwischenschicht aus Metall eine Dicke von etwa 0,05 bis etwa 0,5 mm hat.

9. Verfahren zum Herstellen des Lagerwerkstoffes nach einem der vorhergehenden Ansprüche mit folgenden Schritten: auf einem Metallrücken wird eine poröse Zwischenschicht aus Metall gebildet, indem ein Metallpulvergemisch auf den Metallrücken aufgetragen und auf den Metallrücken aufgestrichen wird, das Metallpulver auf dem Metallrücken gesintert wird, die poröse Zwischenschicht aus Metall mit einer Zusammensetzung auf Polytetrafluorethylenbasis getränkt und im wesentlichen vollständig ausgefüllt wird, und danach die gefüllte poröse Zwischenschicht aus Metall gesintert wird, gekennzeichnet durch folgende Schritte: zunächst wird ein relativ homogenes Metallpulvergemisch beschafft, das im wesentlichen aus Teilchen aus zwei deutlich unterscheidbaren Korngrößenbereichen besteht, und zwar aus einem Bereich eines relativ feinen Pulvers und einem Bereich eines relativ groben Pulvers, wobei die beiden Korngrößenbereiche so gewählt werden, daß sich ein beträchtlicher Teil des relativ feinen Pulvers aus dem relativ homogenen Metallpulvergemisch ausscheidet, wobei das relativ feine Pulver im wesentlichen aus Teilchen einer Korngröße von −300 mesh und kleiner besteht und das relativ grobe Pulver im wesentlichen aus Teilchen mit Korngrößen im Bereich von etwa −60 mesh bis etwa +150 mesh besteht, die Teilchen aus dem relativ feinen Pulverbereich etwa 5 bis etwa 30 Gew.-% der Gesamtmenge des Pulvers ausmachen, die zum Herstellen der porösen Zwischenschicht aus Metall verwendet wird, und das homogene Gemisch derart auf den Rücken aufgestrichen wird, daß ein beträchtlicher Teil des relativ feinen Pulvers sich vor dem Fertigsintern zu der Innenfläche der porösen Zwischenschicht aus Metall im Bereich des Metallrückens hin abscheidet, so daß auf dem Metallrücken ein relativ nichthomogenes Metallpulvergemisch gebildet wird.

**Revendications**

1. Matériau composite pour coussinet, approprié pour la réalisation de paliers tant secs que lubrifiés, comprenant un support métallique, une couche métallique intermédiaire poreuse déposée sur ce support métallique, et une composition à base de polytétrafluoroéthylène, colmatant en grade partie les pores de cette couche métallique intermédiaire poreuse et formant une couche superficielle sur le matériau de support, cette composition à base de polytétrafluoroéthylène, comprenant d'environ 2% à environ 10% en volume d'au moins un matériau choisi parmi le bronze à l'étain et les autres alliages de cuivre, ainsi que les mélanges de ceux-ci; d'environ 5% à environ 30% en volume d'au moins un matériau choisi parmi le plomb métallique, le cadmium métallique, un oxyde de plomb et un oxyde de cadmium, ainsi que les mélanges de ceux-ci; d'environ 5% à environ 30% en volume d'au moins un matériau choisi parmi le graphite naturel et le graphite artificiel, ainsi que les mélanges de ceux-ci; le reste consistant en polytétrafluoroéthylène; caractérisé en ce que la couche métallique intermédiaire poreuse, consiste essentiellement en un mélange relativement non homogène de particules correspondant à deux plages de

7

taille particulaire distinctes, comprenant une plage de poudre relativement fine d'environ et −300 "mesh", et une plage de poudre relativement grossière, d'environ −60 à +150 "mesh", cette plage de poudre relativement fine représentant d'environ 5% à environ 30% du poids de la totalité de la poudre constituant cette couche métallique intermédiaire poreuse, et en ce qu'une importante partie de cette poudre relativement fine, est séparée des particules correspondant à la plage de poudre grossière, en étant concentrée au niveau de la surface intérieure de la couche métallique intermédiaire poreuse, voisine du support métallique, et elle est liée à ce support métallique ainsi qu'à certaines des particules correspondant à la plage relativement grossière, les particules correspondant à cette plage relativement grossière, étant liées entre elles et formant une structure ouverte comportant de nombreux pores traversant au moins la surface extérieure de la couche métallique intermédiaire poreuse.

2. Matériau composite pour coussinet selon la revendication 1, caractérisé en ce que la couche métallique intermédiaire poreuse, est appliquée initialement sur le support métallique, sous la forme d'un mélange relativement homogène de poudres métalliques, comprenant des particules correspondant auxdites plages de poudres relativement fines et relativement grossières, et en ce que pendant ou après l'application sur ce support métallique et avant la fin du frittage, une partie importante de la poudre relativement fine dudit mélange relativement homogène de poudres métalliques, est concentrée au voisinage dudit support métallique, de telle sorte qu'un mélange relativement non homogène de poudres métalliques, est formé sur ce support métallique.

3. Matériau pour coussinet selon la revendication 1 ou 2, caractérisé en ce que cette couche métallique intermédiaire poreuse, comprend du bronze, du bronze à l'étain, du bronze au plomb ou d'autres alliages à base de cuivre.

4. Matériau pour coussinet selon l'une quelconque des revendications 1 à 3, caractérisé en ce que cette couche métallique intermédiaire poreuse, a une épaisseur d'environ 0,25 mm à environ 0,40 mm.

5. Matériau pour coussinet selon l'une quelconque des revendications 1 à 4, caractérisé en ce que la poudre métallique comprend en outre, avant le frittage, de l'éthylène di-stéaramide.

6. Matériau pour coussinet selon l'une quelconque des revendications 1 à 5, caractérisé en ce que le support métallique, comprend de l'acier sur lequel une couche de revêtement est de préférence déposée.

7. Matériau pour coussinet selon l'une quelconque des revendications 1 à 6, caractérisé en ce que la composition à base de polytétrafluoroéthylène, comprend d'environ 4% à environ 6% en volume, de préférence 5% en volume, d'au moins un matériau choisi parmi le bronze à l'étain et d'autres alliages de cuivre, ainsi que des mélanges de ceux-ci; d'environ 15% à environ 30% en volume, de préférence environ 20% en volume, d'au moins un matériau choisi parmi le plomb métallique, le cadmium métallique, un oxyde de plomb et un oxyde de cadmium ainsi que des mélanges de ceux-ci; d'environ 10% à environ 25% en volume, de préférence environ 10% en volume, d'au moins un matériau choisi parmi le graphite naturel et le graphite artificiel, ainsi que les mélanges de ceux-ci; et le reste consistant en polytétrafluoroéthylène.

8. Matériau pour coussinet selon l'une quelconque des revendications 1 à 7, caractérisé en ce que la composition à base de polytétrafluoroéthylène, a une épaisseur supérieure à celle de la couche métallique intermédiaire poreuse, d'environ 0,05 mm à environ 0,5 mm.

9. Procédé de fabrication du matériau pour coussinet selon l'une quelconque des revendications précédentes, dans lequel on forme une couche métallique intermédiaire poreuse, sur un support métallique, en appliquant sur ce support métallique, un mélange de poudres métalliques, on étale ce mélange de poudres métalliques sur ce support métallique, on fritte ces poudres métalliques sur le support métallique, on imprègne et on colmate presque complètement ladite couche métallique intermédiaire poreuse, avec une composition à base de polytétrafluoroéthylène, et on fritte ensuite cette couche métallique intermédiaire poreuse colmatée, à une température d'au moins environ 350°C, caractérisé en ce qu'on prépare initialement un mélange relativement homogène de poudres métalliques, comprenant principalement des particules correspondant à deux plages de taille particulaire distinctes, à savoir une plage de poudre relativement fine et une plage de poudre relativement grossière, on sélectionne ces deux plages de taille particulaire, afin de concentrer une partie importante de la poudre relativement fine dans le mélange relativement homogène de poudres métalliques, de sorte que la poudre relativement fine, consiste essentiellement en particules d'une taille de −300 "mesh", et que la poudre relativement grossière, consiste principalement en particules d'une taille d'environ −60 "mesh" à environ +150 "mesh", la poudre relativement fine représentant d'environ 5% à environ 30% du poids de la totalité de la poudre utilisée pour préparer la couche métallique intermédiaire poreuse, et on étale ce mélange homogène sur le support, de sorte qu'une partie importante de la poudre relativement fine est concentrée au niveau de la surface intérieure de la couche métallique intermédiaire poreuse, voisine du support métallique, avant la fin du frittage, de façon à former un mélange relativement non homogène de poudres métalliques, sur ce support métallique.

○ Bronze (24)

● Lead (26)

— Graphite (28)

FIG. 1.

EP 0 163 937 B1